# EUROPÄISCHE PATENTSCHRIFT

(11) **EP 0 385 411 B1**
(45) Veröffentlichungstag und Bekanntmachung des Hinweises auf die Patenterteilung: **01.06.1994**
(21) Anmeldenummer: 90103831.5
(22) Anmeldetag: 27.02.1990
(51) Int. Cl.: B01D 53/34, B01D 53/36, F23G 7/06

(54) **Verfahren und Vorrichtung zur katalytischen und/oder thermischen Nachverbrennung von Prozess-Abluft**
Process and apparatus for the catalytic and/or thermal post-combustion of exhaust air
Procédé et dispositif pour la postcombustion catalytique et/ou thermique d'air d'échappement

(30) Priorität: 01.03.1989 DE 3906430
(43) Veröffentlichungstag der Anmeldung: 05.09.1990
(73) Patentinhaber: BOOCKMANN GMBH, D-97618 Niederlauer (DE)
(72) Erfinder: Boockmann, Gerhard, 8741 Niederlauer (DE)
(74) Vertreter: Weber, Dieter, Dr.

(56) Entgegenhaltungen:
- EP-A- 0 068 377
- DE-C- 3 616 333
- DE-U- 8 711 112
- GB-A- 2 059 032
- US-A- 4 324 545

## Beschreibung

Es ist bekannt, Abluft aus verschiedenen Prozessen, wie aus Trocknungsverfahren, die mit organischen Verbindungen belastet ist, durch Nachverbrennung in einer Nachverbrennungszone zu reinigen. Diese Nachverbrennung kann in Kombustoren, die mit Öl oder Gas beheizt werden, oder durch elektrisches Erhitzen oder an Oxidationskatalysatoren, vorzugsweise an mit Platinmetallen beschichteten Oberflächen, erfolgen.

Es ist auch bekannt, die in der Nachverbrennungszone durch exotherme Reaktionen entstehende Verbrennungswärme dem Prozeß, aus welchem die Abluft stammt, wieder zuzuführen. Diese Rückgewinnung der Verbrennungsenergie führt nur dann zu einer positiven Energiebilanz der Prozeß-Abluftnachbehandlung, wenn die Temperatursteigerung der Prozeß-Abluft in der Nachverbrennungszone höchstens etwa 150 °K je Volumenprozent des verbrannten Luftsauerstoffes beträgt. Daraus ergibt sich, daß eine wirtschaftliche Abluftnachbehandlung nur bei Kreislaufführung der Verbrennungsluft oder bei sehr aufwendigem Wärmetausch oder unter weitgehender Aufkonzentration der Schadstoffe möglich ist. Derartige Maßnahmen können aber dazu führen, daß die Schadstoffkonzentration so hoch wird, daß bei der Verbrennung die Nachverbrennungsanlage überhitzt wird. Andererseits können bei nicht-kontinuierlichen Prozessen, wie insbesondere bei der Vakuum- oder Vakuumdrucktränkung, periodisch geringe Schadstoffmengen anfallen, was eine Aufkonzentrierung der Schadstoffkonzentration aufwendig und unwirtschaftlich macht.

In jedem Fall war es bei Verfahren zur Rückgewinnung der Verbrennungsenergie aus Nachverbrennungszonen bisher üblich, die Anlagengröße und den Volumenstrom dem maximalen Schadstoffanfall anzupassen, was bei wechselnden Konzentrationen der Schadstoffe oder organischen Verbindungen in der Prozeß-Abluft äußert unwirtschaftlich ist, da bei vielen Prozessen der Schadstoffanteil periodisch erfolgt oder hinsichtlich der Menge stark schwankt. Zur Regelung des Luftvolumenstromes in Lackieranlagen ist es auch bereits bekannt, unter Verwendung empfindlicher und teurer Analysengeräte die Schadstoffkonzentration zu messen.

Die DE-U-8 711 112 beschreibt eine Nachverbrennungsvorrichtung zum katalytischen Nachverbrennen von organische Lösungsmittel und/oder andere oxidierbare Substanzen enthaltender Abluft mit einer Strömungsmaschine zum Fördern der Abluft, einem Wärmeerzeuger zum Erwärmen der ungereinigten Abluft, einem ihr nachgeschalteten Katalysator zur katalytischen Nachverbrennung der Abluft und einem von der gereinigten Abluft durchströmbaren Wärmetauscher zur Rückgewinnung von Wärme aus ihm, wobei die Nachverbrennungsvorrichtung als Baueinheit ausgebildet ist, die ein Außengehäuse mit einem Ablufteinlaß für ungereinigte Abluft und einem Abluftauslaß für die durch die katalytische Nachverbrennung gereinigte Abluft aufweist, in diesem Außengehäuse das Laufrad der Strömungsmaschine, mindestens ein Katalysator und der Wärmetauscher angeordnet sind, der Wärmetauscher Strömungswege für die ungereinigte und die gereinigte Abluft zum Übertragen von Wärme von der gereinigten Abluft auf die ungereinigte Abluft aufweist und in diesem Außengehäuse eine Heizkammer angeordnet ist, die von der ungereinigten Abluft durchströmbar ist und in der ihr durch mindestens eine Wärmequelle Wärme zuführbar ist.

Die GB-A-2 059 032 beschreibt ein System und Verfahren für die Zufuhr von Heizenergie zu einem Primärverfahren, das einen verbrennbaren Auslauf erzeugt. Dabei wird der Ausstoß der Nachverbrennungsanlage auf den Wärmeenergiebedarf des Verfahrens eingestellt. Abluft wird von dem Verfahren vor der Verbrennungskammer durch einen Wärmetauscher geführt, dem ein Teild er Wärme der verbrannten Abluft zugeführt wird. Die verbrannte Abluft wird zum Verfahren zurückgeführt, um dessen Wärmebedarf zu decken. Die Steuerung erfolgt durch Regulierung der Brennertemperatur und des Bypass-Durchgangs.

Die der Erfindung zugrundeliegende Aufgabe bestand in einem Verfahren zur katalytischen und/oder thermischen Nachverbrennung von organische Verbindungen in wechselnder Konzentration enthaltender Prozeß-Abluft, bei dem eine erhöhte Wirtschaftlichkeit durch Anpassung der Betriebsbedingungen an den Schadstoffanfall erzielt wird.

Das erfindungsgemäße Verfahren zur katalytischen und/oder thermischen Nachverbrennung von organische Verbindungen in wechselnder Konzentration enthaltender Prozeß-Abluft durch Führung der Prozeß-Abluft durch eine Nachverbrennungszone ist dadurch gekennzeichnet, daß man oberhalb eines Mindestwertes des Volumenstromes durch die Nachverbrennungszone diesen so regelt, daß die Temperaturerhöhung der Prozeß-Abluft in der Nachverbrennungszone unterhalb eines vorgegebenen Maximalwertes und unterhalb 1300 K bleibt, und daß man die Nachverbrennungszonen-Zuluft derart vorheizt, daß die Nachverbrennungszonen-Abluft eine Temperatur innerhalb eines vorbestimmten Bereiches besitzt.

Dieses erfindungsgemäße Verfahren ist in Verbindung mit allen Prozessen sinnvoll, die eine Prozeß-Abluft ergeben, in welcher die organischen Verbindungen wechselnde Konzentrationen haben, wie beispielsweise für das Verfahren zum Tränken oder Beschichten von Gegenständen gemäß der nachveröffentlichten DE-A-3 842 642 oder für andere Verfahren mit gekapselten Anlagen, z. B. mit Kammeröfen.

Mit Hilfe des erfindungsgemäßen Verfahrens wird die Prozeß-Abluftnachbehandlung derart geregelt, daß sie sich je nach Schadstoffanteil selbständig stabilisiert, ohne daß eine aufwendige Analytik erforderlich ist. Die Temperaturerhöhung in der Nachverbrennungszone ist dem Schadstoffanfall äquivalent und gewährleistet bei Einhaltung der erfindungsgemäßen Verfahrensmaßnahmen, daß die Prozeß-Abluft keine explosionsgefährliche Konzentration der Schadstoffe erreicht und daß die Prozeß-Abluft keine Schadstoffkonzentrationen erreicht, die zur Überhitzung der Abluftbehandlungsanlage führen würden.

Bevorzugt wird der Volumenstrom durch die Verbrennungszone derart geregelt, daß die Temperaturerhöhung der Prozeß-Abluft in der Nachverbrennungszone unterhalb 800 K, vorzugsweise zwischen 300 und 500 K bleibt. Der zu wählende Temperaturbereich ergibt sich vorwiegend aus der Beständigkeit der verwendeten Werkstoffe.

Die Regelung des Volumenstromes in dem erfindungsgemäßen Verfahren ist erst oberhalb eines bestimmten Mindestwertes des Volumenstromes erforderlich, da bei einem Volumenstrom nahe Null oder mit einem geringen Wert keine Probleme auftreten können, so daß in solchen Fällen das erfindungsgemäße Regelungssystem abschalten kann. Der festzulegende Mindestwert richtet sich nach dem gegebenen Regelbereich der verwendeten Vorrichtung zur Förderung des Volumenstromes sowie nach dem Gesichtspunkt der ausreichenden Durchspülung aller Anlagenteile.

Die Regelung des Volumenstromes durch die Nachverbrennungszone nach dem erfindungsgemäßen Verfahren erfolgt derart, daß bei einem Anstieg der Temperaturdifferenz, d. h. bei einem Anstieg der Schadstoffkonzentration, d. h. der Konzentration organischer Verbindungen in der Prozeß-Abluft, in der Nachverbrennungszone der Durchsatz der Prozeß-Abluft durch die Nachverbrennungszone erhöht und damit die Energieaufnahme der Prozeß-Abluft durch die Vorheizung reduziert wird. Das heißt, beim Anstieg der Temperaturdifferenz in der Nachverbrennungszone wird die Temperatur der in die Nachverbrennungszone eintretenden Prozeß-Abluft vermindert, was auch zu einer Reduzierung und damit Stabilisierung der Temperatur der aus der Nachverbrennungszone austretenden Prozeß-Abluft führt. Die Erhöhung des Durchsatzes der Prozeß-Abluft führt zu vermehrtem Ansaugen von Frischluft in dem Prozeß, erhöhter Rückführung von Nachverbrennungsabluft in die Prozeßluft und so zur Verdünnung des Schadstoffes. Da die Temperaturerhöhung in der Nachverbrennungszone der Schadstoffkonzentration folgt, wird auch so durch Nachführung des Volumenstromes die Temperatur stabilisiert.

Zweckmäßig kann diese Regelung der Temperaturerhöhung der Prozeß-Abluft von dem Punkt des Verlassens des Prozesses zu dem Punkt des Verlassens der Nachverbrennungszone mit Hilfe einer schwankungsabhängigen Regelung des Prozeß-Abluftvolumenstromes dadurch unterstützt und begleitet werden, daß der Nachbehandlungszonen-Zuluft zusätzlich Frischluft zugemischt wird, durch welche die Schadstoffkonzentration in der Prozeß-Abluft reduziert und gegebenenfalls die Temperatur der Prozeß-Abluft herabgesetzt wird.

Es ist denkbar, das erfindungsgemäße Verfahren mit einer Nachverbrennungszone durchzuführen, die ohne Katalysator arbeitet. In diesem Fall muß jedoch die Nachverbrennungszonen-Zuluft relativ hoch, gewöhnlich oberhalb 700 °C, vorerhitzt werden, da die Zündtemperatur ohne Katalysator im Bereich von 450 bis 500 °C liegt und die Nachverbrennung mit annehmbarer Geschwindigkeit somit Temperaturen von mindestens 700 °C in der Nachverbrennungszone benötigt.

Aus diesem Grund ist es bevorzugt, in dem erfindungsgemäßen Verfahren eine katalytische Nachverbrennungszone zu verwenden, die einen an sich bekannten Oxidationskatalysator enthält. Beispielsweise und zweckmäßig besteht dieser Oxidationskatalysator aus einem platinmetallbeschichteten Metallbandkatalysator, wie er für Nachverbrennungen bekannt ist.

Durch die Verwendung eines Katalysators wird die Zündtemperatur der Prozeß-Abluft herabgesetzt, wie beispielsweise auf 300 °C, so daß die Prozeß-Abluft vor der Nachverbrennungszone nur auf eine Temperatur von 300 bis 500 °C vorgeheizt werden muß.

Mit Hilfe der Vorheizung muß die Nachverbrennungszonen-Zuluft auf die erforderliche Verbrennungstemperatur oberhalb der Zündtemperatur gebracht werden, welche davon abhängt, ob und welcher Katalysator in der Nachverbrennungszone verwendet wird. Das Vorheizen der Nachverbrennungszonen-Zuluft kann auf unterschiedliche Weise erfolgen, wie beispielsweise durch konventionelle elektrische Heizeinrichtungen oder durch Gas, Öl oder andere Brennstoffe beheizte Heizeinrichtungen. Eine solche beispielsweise elektrische Heizeinrichtung ist erforderlich, um die Nachverbrennungszonen-Zuluft auf die nötige Zündtemperatur zu bringen.

Diese Art von Heizeinrichtung ist also irgendeine, welcher Heizenergie von außerhalb der Verfahrensströme zugeführt wird.

Um das Abluftnachbehandlungsverfahren besonders energiesparend und damit wirtschaftlich durchzuführen, ist es zweckmäßig, zusätzlich zu einer solchen Heizeinrichtung, welcher Heizenergie von außen, wie durch elektrischen Strom, Gas oder anderen Brennstoff, zugeführt wird, einen Wärmetauscher zu verwenden, in welchem die Nachverbrennungszonen-Zuluft vor der Einführung in die Nachverbrennungszone einem Wärmetausch mit der Nachverbrennungszonen-Abluft unterzogen wird. Wenn beispielsweise die Prozeß-Abluft den Prozeß, aus welchem sie stammt, mit einer Temperatur von 100 bis 150 °C verläßt, kann sie mit Hilfe der Nachverbrennungszonen-Abluft mit einer Temperatur von 700 bis 900 °C durch Wärmeaustausch auf eine Temperatur von 300 bis 500 °C gebracht werden, so daß es nur noch geringer zusätzlicher Heizenergie von außen bedarf, um die Nachverbrennungszonen-Zuluft auf die in der Nachverbrennungszone erforderliche Zündtemperatur zu bringen.

Der erwähnte Wärmetauscher wird in der Leitung für die Nachverbrennungszonen-Zuluft vor der mit Wärmeenergie von außen gespeisten Heizeinrichtung installiert, damit der Temperaturunterschied zwischen der Prozeß-Abluft und der Nachverbrennungszonen-Abluft im Wärmetauscher möglichst groß ist. Durch den Wärmetausch vor der Nacherhitzung mit Hilfe einer Heizeinrichtung, die Wärmeenergie von außen zugeführt bekommt, wie einer elektrischen Nacherhitzung, wird erreicht, daß die in der Nachverbrennungszone durch Nacherhitzen erforderliche Zündenergie, die durch den Katalysator ohnehin schon niedrig gehalten wird, weiter reduziert wird. Im Normalbetrieb sollte der Wärmetausch genügen, um der Prozeßabluft die für die Nachverbrennung erforderliche Zündenergie zu geben, ohne daß eine weitere Nacherhitzung mit Hilfe elektrischer oder anderer Energie von außen erfolgt. Beim Anlaufen des Verfahrens oder nach Situationen, in denen die Nachverbrennungszonen-Ablufttemperatur stark reduziert wurde, ist die zusätzliche elektrische oder anderweitig von außen mit Energie versorgte Heizeinrichtung erforderlich, so daß diese gewöhnlich zum notwendigen Bestandteil der erfindungsgemäßen Vorrichtung gehört.

Die Nachverbrennungszonen-Zuluft wird vorzugsweise derart vorgeheizt, daß die Nachverbrennungszonen-Abluft eine Temperatur im Bereich von 450 bis 1000 °C, vorzugsweise im Bereich von 700 bis 900 °C besitzt. Die Einstellung der Temperatur der Nachverbrennungszonen-Abluft innerhalb eines solchen vorbestimmten Bereiches gewährleistet einen ausreichenden Wärmetausch mit der Nachverbrennungszonen-Zuluft. Der bevorzugte Bereich von 700 bis 900 °C garantiert auch bei Vergiftung oder Ausfall des Katalysators, daß eine sichere Verbrennung der organischen Verbindungen in der Prozeß-Abluft noch gewährleistet ist.

Wenn oben davon die Rede ist, daß die Regelung des Volumenstromes so erfolgen soll, daß die Temperaturerhöhung der Prozeß-Abluft in der Nachverbrennungszone unterhalb eines vorgegebenen Maximalwertes liegt, so bedeutet dies gewöhnlich, daß man für den Temperaturunterschied zwischen zwei Punkten am Eingang der Nachverbrennungszone und am Ausgang der Nachverbrennungszone einen Sollwert festlegt, um den herum die Temperaturerhöhung schwankt. Die Obergrenze dieses Schwankungsbereiches ist der vorgegebene Maximalwert. Wenn die Temperaturerhöhung sich diesem Maximalwert nähert, wird der Volumenstrom erhöht und gegebenenfalls Frischluft zugeführt, während bei Annäherung an den Minimalwert des Schwankungsbe reiches um den Sollwert der Volumenstrom der Prozeß-Abluft reduziert und die Frischluftzufuhr gedrosselt wird.

Die den oben diskutierten Wärmetauscher verlassende Nachverbrennungszonen-Abluft besitzt noch einen Wärmeinhalt, der es unwirtschaftlich machen würde, diese Abluft an die Umgebung abzugeben. Aus diesem Grund ist es besonders zweckmäßig, die Nachverbrennungszonen-Abluft, im Falle der Verwendung des oben diskutierten Wärmetauschers für den Wärmetausch mit der Nachverbrennungszonen-Zuluft hinter diesem Wärmetauscher, entweder direkt in die Prozeß-Zuluft oder Prozeß-Umluft des Verfahrens, aus dem die Prozeß-Abluft stammt, zurückzuführen und/oder einem Wärmetausch mit Prozeß-Zuluft oder Prozeß-Umluft für dieses Verfahren zu unterziehen. Auf diese Weise wird wenigstens ein Teil des restlichen Wärmeinhalts der Nachverbrennungszonen-Abluft in den Prozeß zurückgeführt, aus welchem die Prozeß-Abluft entnommen wurde.

Die Erfindung betrifft auch eine für das erfindungsgemäße Verfahren zweckmäßige Vorrichtung mit einer Nachverbrennungskammer, die zweckmäßig einen Oxidationskatalysator enthält, sowie mit einer Nachverbrennungskammer-Zuluftleitung, einer Nachverbrennungskammer-Abluftleitung und Einrichtungen zur Beförderung und zur Regelung der Nachverbrennungskammer-Zuluft. Diese Vorrichtung besitzt erfindungsgemäß eine Einrichtung zur Messung der Temperaturerhöhung in der Nachverbrennungskammer, eine Einrichtung, die die Einrichtung zur Regelung der Nachverbrennungskammer-Zuluft in Abhängigkeit von der Temperaturerhöhung in der Nachverbrennungskammer steuert, und eine in die Nachverbrennungskammer-Zuluftleitung eingeschaltete Heizeinrichtung.

Bevorzugt ist als Heizeinrichtung in die Nachverbrennungskammer-Zuluftleitung ein Wärmetauscher, in den die Nachverbrennungskammer-Abluftleitung zum Wärmetausch mit der in die Nachverbrennungskammer-Zuluftleitung gehenden Prozeß-Abluft mündet, und zwischen dem Wärmetauscher und der Nachverbrennungskammer eine Nachheizeinrichtung, vorzugsweise eine elektrische Heizeinrichtung, eingeschaltet.

Um entsprechend der oben beschriebenen bevorzugten Ausführungsform möglichst viel Wärmeinhalt der Abluft der Nachverbrennungskammer zurückzugewinnen, ist es zweckmäßig, daß in die Nachverbrennungskammer-Abluftleitung nach dem Wärmetauscher zur Erwärmung der Prozeß-Abluft in der Nachverbrennungskammer-Zuluftleitung ein weiterer Wärmetauscher für Wärmetausch mit der Prozeß-Zuluft oder Prozeß-Umluft des Verfahrens, aus dem die Prozeß-Abluft stammt, eingeschaltet ist.

Zweckmäßig besitzt in der erfindungsgemäßen Vorrichtung die Nachverbrennungskammer-Zuluftleitung eine Einrichtung zum Zumischen von Frischluft zu der in ihr geführten Prozeß-Abluft. Weiterhin besitzt sie vorzugsweise eine Einrichtung, die das Verhältnis von in die Prozeß-Zuluft oder -Umluft zurückgeführter und an die Umgebung abgegebener Nachverbrennungskammer-Abluft regelt, und zwar zweckmäßig in Abhängigkeit vom Sauerstoffgehalt der Prozeß-Luft.

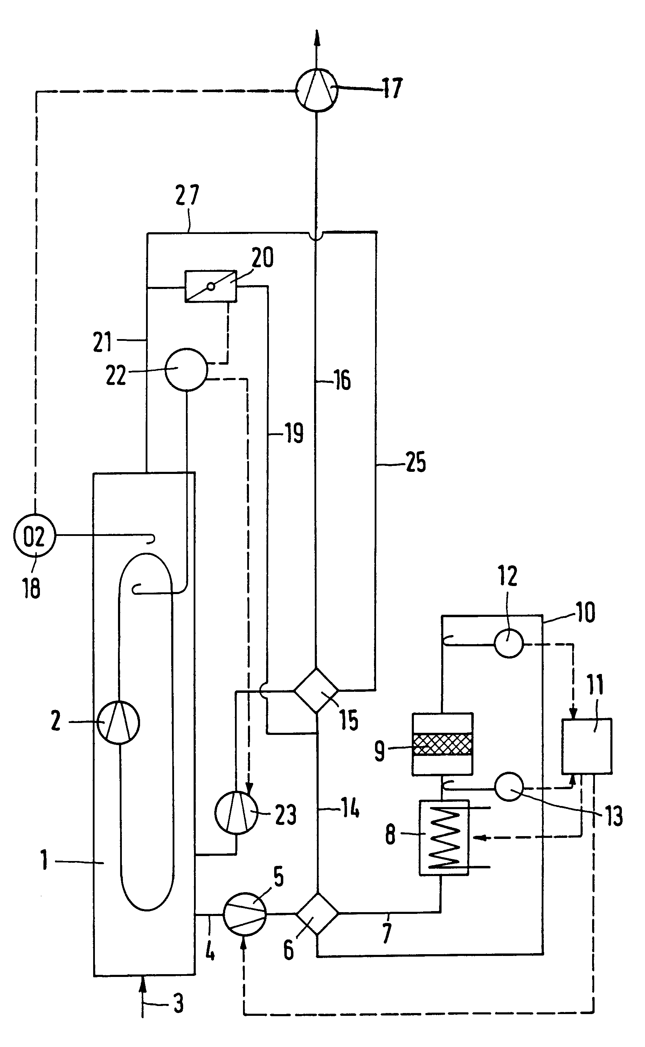

In der beigefügten Zeichnung ist schematisch das Verfahren nach der Erfindung weiter erläutert.

Mit dem Bezugszeichen 1 ist ein Prozeß-Raum, wie ein Kammerofen oder Trocknungsofen bezeichnet, in welchem mit Hilfe des Ventilators 2 eine interne Umluftbewegung erzeugt wird. In dieser Vorrichtung 1 spielt sich also ein Prozeß, wie ein Trocknungsprozeß, ab, dem die nachzuverbrennende Abluft entnommen wird.

Über die Leitung 3 wird dem Trockner 1 Zuluft zugeführt, über Leitung 4 wird aus dem Trockner 1 mit organischen Verbindungen (Schadstoffen) beladene Prozeß-Abluft abgeführt. Diese hat beispielsweise eine Temperatur von 100 bis 150 °C. Sie wird durch den Ventilator 5 zu dem Wärmetauscher 6 geführt, in welchem sie im Wärmetausch mit Abluft der Nachverbrennungskammer 9 auf eine Temperatur von beispielsweise 300 bis 500 °C gebracht wird. Über die Rohrleitung 7 gelangt die Prozeß-Abluft durch die Nachheizeinrichtung 8, wie beispielsweise eine elektrische Heizeinrichtung, die die Temperatur erforderlichenfalls auf die in der Nachverbrennungskammer 9 erforderliche Zündtemperatur anhebt.

Von der Nachheizeinrichtung 8 gelangt die Prozeß-Abluft in die katalytische Nachverbrennungskammer 9, in welcher die organischen Verbindungen im wesentlichen vollständig verbrannt werden. Die Abluft der Nachverbrennungskammer 9 gelangt beispielsweise mit einer Temperatur von 700 bis 900 °C über die Leitung 10 zu dem Wärmetauscher 6, wo sie Wärmeenergie im Wärmetausch mit der kälteren Prozeß-Abluft abgibt.

Mit Hilfe der beiden Temperaturfühler 12 und 13 und des Realers oder Rechners 11 wird die Drehzahl des Ventilators 5 und damit der Volumenstrom einerseits und die Nachheizeinrichtung 8 andererseits geregelt.

Von dem Wärmetauscher 6 gelangt die Abluft der Nachverbrennungskammer 9 über Leitung 14 zu dem Wärmetauscher 15, in welchem sie weiteren Wärmeinhalt an die aus dem Ventilator 23 kommende Umluft des Trockners 1 abgibt und dann mit einer Temperatur von 150 bis 250 °C über die Leitung 16 und den Ventilator 17 an die Umgebung abgegeben wird. Der Ventilator 17 wird mit Hilfe des Sauerstoffsensors 18 in Abhängigkeit vonem Sauerstoffgehalt im Trockner geregelt.

Von der Leitung 14 zweigt eine Leitung 19 ab und führt über eine Drosselklappe 20 zu einer Leitung 21, die in den Trockner 1 mündet. Mit Hilfe dieses Leitungsweges kann bei Bedarf wenigstens ein Teil der Abluft der Nachverbrennungskammer 9 nach dem Wärmetausch in dem Wärmetauscher 6 direkt in den Trockner eingeführt werden.

Mit Hilfe des regelbaren Ventilators 23 wird ein Luftstrom aus dem Trockner 1 über den Wärmetauscher 15, die Leitung 25 und die Leitungen 27 und 21 als Umluft des Trockners 1 geführt. Diese Prozeß-Umluft wird in dem Wärmetauscher 15 durch Wärmetausch mit Abluft aus der Nachverbrennungskammer 9 erwärmt. Die Drosselklappe 20 und der Ventilator 23 werden mit Hilfe des Temperaturfühlers 22 in dem Trockner 1 geregelt.

## Patentansprüche

1. Verfahren zur katalytischen und/oder thermischen Nachverbrennung von organische Verbindungen in wechselnder Konzentration enthaltender Prozeß-Abluft durch Führung der Prozeß-Abluft durch eine Nachverbrennungszone, **dadurch gekennzeichnet**, daß man oberhalb eines Mindestwertes des Volumenstromes durch die Nachverbrennungszone diesen so regelt, daß die Temperaturerhöhung der Prozeß-Abluft in der Nachverbrennungszone unterhalb eines vorgegebenen Maximalwertes und unterhalb 1300 K bleibt, und daß man die Nachverbrennungszonen-Zuluft derart vorheizt, daß die Nachverbrennungszonen-Abluft eine Temperatur innerhalb eines vorbestimmten Bereiches besitzt.

2. Verfahren nach Anspruch 1, **dadurch gekennzeichnet**, daß man den Volumenstrom durch die Nachverbrennungszone derart regelt, daß die Temperaturerhöhung der Prozeß-Abluft in der Nachverbrennungszone unterhalb 800 K, vorzugsweise zwischen 300 und 500 K bleibt.

3. Verfahren nach Anspruch 1 oder 2, **dadurch gekennzeichnet**, daß man mit einer katalytischen Nachverbrennungszone arbeitet.

4. Verfahren nach Anspruch 3, **dadurch gekennzeichnet**, daß man als Katalysator in der Nachverbrennungszone einen Oxidationskatalysator, vorzugsweise einen platinmetallbeschichteten Metallbandkatalysator verwendet.

5. Verfahren nach einem der Ansprüche 1 bis 4, **dadurch gekennzeichnet**, daß man die Nachverbrennungszonen-Zuluft dadurch vorheizt, daß man sie durch eine Heizeinrichtung, vorzugsweise eine Kombination aus Wärmetauscher und elekrischer Heizeinrichtung, führt.

6. Verfahren nach einem der Ansprüche 3 bis 5, **dadurch gekennzeichnet**, daß man die Nachverbrennungszonen-Zuluft vorheizt, indem man sie vor der Einführung in die katalytische Nachverbrennungszone einem Wärmetausch mit der Nachverbrennungszonen-Abluft unterzieht.

7. Verfahren nach einem der Ansprüche 1 bis 6, **dadurch gekennzeichnet**, daß man die Nachverbrennungszonen-Zuluft derart vorheizt, daß die Nachverbrennungszonen-Abluft eine Temperatur im Bereich von 450 bis 1000 °C, vorzugsweise von 700 bis 900 °C besitzt.

8. Verfahren nach einem der Ansprüche 1 bis 7, **dadurch gekennzeichnet**, daß man die Nachverbrennungszonen-Abluft in die Prozeß-Zuluft oder -Umluft des Verfahrens, aus dem die Prozeß-Abluft stammt, zurückführt und/oder mit der Prozeß-Zuluft oder -Umluft für dieses Verfahren wärmetauscht.

9. Verfahren nach Anspruch 8, **dadurch gekennzeichnet**, daß man die Rückführung und/oder den Wärmetausch nach dem Energiebedarf des Verfahrens, aus dem die Prozeß-Abluft stammt, und einem vorgegebenen Minimum von Restsauerstoff, vorzugsweise zwischen 8 und 18 Vol.-%, besonders zwischen 14 und 16 Vol.-%, in der Prozeß-Umluft regelt.

10. Verfahren nach einem der Ansprüche 1 bis 9, **dadurch gekennzeichnet,** daß man die Temperaturerhöhung der Prozeß-Abluft in der Nachverbrennungszone und die Temperatur der Nachverbrennungszonen-Abluft zusätzlich durch Zumischen von Frischluft zu der Nachverbrennungszonen-Zuluft regelt.

11. Vorrichtung zur katalytischen und/oder thermischen Nachverbrennung von organische Verbindungen enthaltender Prozeß-Abluft mit einer Nachverbrennungskammer, einer Nachverbrennungskammer-Zuluftleitung, einer Nachverbrennungskammer-Abluftleitung und Einrichtungen zur Beförderung und zur Regelung der Nachverbrennungskammer-Zuluft, **gekennzeichnet durch** eine Einrichtung (12, 13) zur Messung der Temperaturerhöhung in der Nachverbrennungskammer (9), eine Einrichtung (11), die die Einrichtung zur Regelung der Nachverbrennungskammer-Zuluft in Abhängigkeit von der Temperaturerhöhung in der Nachverbrennungskammer steuert, und eine in die Nachverbrennungskammer-Zuluftleitung (4, 7) eingeschaltete Heizeinrichtung (6, 8).

12. Vorrichtung nach Anspruch 11, **dadurch gekennzeichnet**, daß als Heizeinrichtung in die Nachverbrennungskammer-Zuluftleitung (4, 7) ein Wärmetauscher (6), in den die Nachverbrennungskammer-Abluftleitung (10) zum Wärmetausch mit der in die Nachverbrennungskammer-Zuluftleitung (4, 7) gehenden Prozeß-Abluft mündet, und zwischen dem Wärmetauscher (6) und der Nachverbrennungskammer (9) eine Nachheizeinrichtung (8), vorzugsweise eine elektrische Heizeinrichtung, eingeschaltet ist.

13. Vorrichtung nach Anspruch 11 oder 12, **dadurch gekennzeichnet**, daß die Nachverbrennungskammer (9) einen Oxidationskatalysator enthält.

14. Vorrichtung nach einem der Ansprüche 11 bis 13, **dadurch gekennzeichnet**, daß in die Nachverbrennungskammer-Abluftleitung (10, 14, 16) nach dem Wärmetauscher (6) zur Erwärmung der Prozeß-Abluft in der Nachverbrennungskammer-Zufuhrleitung (4, 7) ein weiterer Wärmetauscher (15) für Wärmetausch mit der Prozeß-Zuluft oder -Umluft des Verfahrens, aus dem Prozeß-Abluft stammt, eingeschaltet ist.

15. Vorrichtung nach einem der Ansprüche 11 bis 14, **dadurch gekennzeichnet**, daß die Nachverbrennungskammer-Zuluftleitung (4, 7) eine Einrichtung zum Zumischen von Frischluft (5) zu der in ihr geführten Prozeß-Abluft aufweist.

16. Vorrichtung nach einem der Ansprüche 14 und 15, **dadurch gekennzeichnet**, daß sie eine Einrichtung (17, 20) besitzt, die das Verhältnis von in die Prozeß-Zuluft oder -Umluft zurückgeführter und an die Umgebung abgegebener Nachverbrennungskammer-Abluft regelt.

17. Vorrichtung nach Anspruch 16, **dadurch gekennzeichnet**, daß die Regelungseinrichtung (17, 20) das Verhältnis in Abhängigkeit vom Sauerstoffgehalt der Prozeß-Luft (18) regelt.

## Claims

1. A method for catalytic and/or thermal post-combustion of process exhaust air containing varying concentrations of organic compounds by guiding the process exhaust air through a post-combustion zone, characterised in that when the flow by volume through the post-combustion zone is above a minimum value it is controlled in such a way that the temperature increase of the process exhaust air in the post-combustion zone remains below a given maximum value and below 1300 K, and that the post combustion zone supply air is preheated in such a way that the temperature of the post combustion zone exhaust air is within a given range.

2. A method according to Claim 1, characterised in that the flow by volume through the post combustion zone is controlled in such a way that the temperature increase of the process exhaust air in the post combustion zone remains below 800 K, preferably between 300 and 500 K.

3. A method according to Claim 1 or Claim 2, characterised in that the operation is carried out with a catalytic post combustion zone.

4. A method according to Claim 3, characterised in that the catalyst used in the post combustion zone is an oxidation catalyst, preferably a platinum metal coated metallic ribbon catalyst.

5. A method according to one of Claims 1 to 4, characterised in that the post combustion supply air is preheated in such a way that it is guided through a heating means, preferably a combination of heat exchanger and electric heating means.

6. A method according to one of Claims 3 to 5, characterised in that the post combustion zone supply air is preheated by being subjected to heat exchange with the post combustion zone exhaust air prior to being introduced into the catalytic post combustion zone.

7. A method according to one of Claims 1 to 6, characterised in that the post combustion zone supply air is preheated in such a way that the temperature of the post combustion zone exhaust air is within a range of 450 to 1000°C, preferably from 700 to 900°C.

8. A method according to one of Claims 1 to 7, characterised in that the post combustion zone exhaust air is returned to the process supply air or process recirculated air of the method, from which the process exhaust air comes, and/or is heat exchanged with the process supply air or -recirculated air for this method.

9. A method according to Claim 8, characterised in that the returning process and/or the heat exchange process is controlled in the process recirculated air in dependency on the energy requirement of the method from which the process exhaust air comes and in dependency on a given minimum of residual oxygen, preferably between 8 and 18% by volume, in particular between 14 and 16% by volume.

10. A method according to one of Claims 1 to 9, characterised in that the temperature increase of the process exhaust air in the post combustion zone and the temperature of the post combustion zone exhaust air is controlled by additionally mixing fresh air with the post combustion zone supply air.

11. An apparatus for the catalytic and/or thermal post combustion of process exhaust air containing organic compounds, the apparatus having a post combustion chamber, a post combustion chamber supply air conduit, a post combustion chamber exhaust air conduit and means for conveying and regulating the post combustion chamber supply air, characterised by a means (12, 13) for measuring the temperature increase in the post combustion chamber (9), a means (11) which controls the means for regulating the post combustion chamber supply air in dependency on the temperature increase in the post combustion chamber, and a heating means (6, 8) which is integrated in the post combustion chamber supply air conduit (4, 7).

12. An apparatus according to Claim 11, characterised in that the heating means integrated into the post combustion chamber supply air conduit (4, 7) is a heat exchanger (6) into which the post combustion chamber exhaust air conduit (10) opens for heat exchange with the process exhaust air passing into the post combustion chamber supply air conduit (4, 7), and fitted between the heat exchanger (6) and the post combustion chamber (9) is a post-heating means (8), preferably an electrical heating means.

13. An apparatus according to Claim 11 or Claim 12, characterised in that the post combustion chamber (9) contains an oxidation catalyst.

14. An apparatus according to one of Claims 11 to 13, characterised in that integrated into the post combustion chamber exhaust air conduit (10, 14, 16) downstream of the heat exchanger (6) for heating the process exhaust air in the post combustion chamber supply air conduit (4, 7) is another heat exchanger (15) for heat exchange with the process supply air or -recirculated air of the method, from which the process exhaust air comes.

15. An apparatus according to one of Claims 11 to 14, characterised in that the post combustion chamber supply air conduit (4, 7) has a means for mixing fresh air (5) with the process exhaust air which is guided thereinto.

16. An apparatus according to one of Claims 14 and 15, characterised in that it has a means (17, 20) which controls the ratio of post combustion chamber exhaust air which is returned into the process supply air or -recirculated air and given off to the surroundings.

17. An apparatus according to Claim 16, characterised in that the regulating means (17, 20) controls the ratio in dependency on the oxygen content of the process air (18).

## Revendications

1. Procédé pour la postcombustion catalytique et/ou thermique de l'air d'échappement de processus industriel contenant des composés organiques en concentration variable par entraînement de l'air d'échappement du processus à travers une zone de postcombustion, caractérisé en ce que, au-dessus d'une valeur minimale du flux volumique à travers la zone de postcombustion, on règle celui-ci de telle sorte que l'élévation de température de l'air d'échappement du processus dans la zone de postcombustion reste au-dessous d'une valeur maximale prédéterminée et au-dessous de 1300 K et que l'on préchauffe l'air d'admission dans la zone de postcombustion de manière que l'air d'échappement de la zone de postcombustion possède une température à l'intérieur d'une plage prédéterminée.

2. Procédé selon la revendication 1, caractérisé en ce qu'on règle le flux volumique à travers la zone de postcombustion de telle manière que l'élévation de température de l'air d'échappement du processus dans la zone de postcombustion demeure au-dessous de 800 K, de préférence entre 300 et 500 K.

3. Procédé selon la revendication 1 ou 2, caractérisé en ce qu'on opère avec une zone de postcombustion catalytique.

4. Procédé selon la revendication 3, caractérisé en ce qu'on emploie comme catalyseur dans la zone de postcombustion un catalyseur d'oxydation, de préférence un catalyseur sous forme de bande métallique revêtu d'un métal du groupe du platine.

5. Procédé selon l'une des revendications 1 à 4, caractérisé en ce qu'on préchauffe l'air d'admission dans la zone de postcombustion en l'envoyant à travers une installation de chauffage, de préférence une combinaison d'un échangeur de chaleur et d'une installation de chauffage électrique.

6. Procédé selon l'une des revendications 3 à 5, caractérisé en ce qu'on préchauffe l'air d'admission dans la zone de postcombustion en le soumettant, avant introduction dans la zone de postcombustion catalytique, à un échange de chaleur avec l'air d'échappement de la zone de postcombustion.

7. Procédé selon l'une des revendications 1 à 6. caractérisé en ce qu'on préchauffe l'air d'admission de la zone de postcombustion de telle manière que l'air d'échappement de la zone de postcombustion possède une température comprise dans la gamme de 450 à 1000°C, de préférence de 700 à 900°C.

8. Procédé selon l'une des revendications 1 à 7, caractérisé en ce qu'on recycle l'air d'échappement de la zone de postcombustion dans l'air d'admission ou dans l'air de circulation du procédé dont est issu l'air d'échappement du processus et/ou le soumet à un échange de chaleur avec l'air d'admission ou l'air de circulation du processus pour ce procédé.

9. Procédé selon la revendication 8, caractérisé en ce qu'on règle le recyclags et/ou l'échange de chaleur suivant la consommation d'énergie du procédé dont est issu l'air d'échappement du processus et suivant un minimum d'oxygène résiduel prédéterminé, de préférence entre 8 et 18% en vol., notamment entre 14 et 16% en vol. dans l'air de circulation du processus.

10. Procédé selon l'une des revendications 1 à 9, caractérisé en ce qu'on règle en outre l'élévation de température de l'air d'échappement du processus dans la zone de postcombustion et la température de l'air d'échappement de la zone de postcombustion par introduction d'air frais dans l'air d'admission de la zone de postcombustion.

11. Dispositif pour la postcombustion catalytique et/ou thermique de l'air d'echappment d'un processus industriel contenant des composés orqaniques comportant une chambre de postcombustion, une conduite d'air d'admission de la chambre de postcombustion, une conduite d'air d'échappement de la chambre de postcombustion et des installations pour l'acheminement et le réglage de l'air d'admission de la chambre de postcombustion, caractérisé par une installation (12, 13) pour la mesure de l'élévation de température dans la chambre de postcombustion (9), une installation (11) qui commande l'installation pour le réglage de l'air d'admission de la chambre de postcombustion en fonction de l'élévation de température dans la chambre de postcombustion et une installation de chauffage (6, 8) intercalée dans la conduite d'air d'admission (4, 7) de la chambre de postcombustion.

12. Dispositif selon la revendication 11, caractérisé en ce que, en tant qu'installation de chauffage. un échangeur de chaleur (6) dans lequel débouche la conduite d'air d'échappement de la chambre de postcombustion (10) en vue de l'échange de chaleur avec l'air d'échappement du processus pénétrant dans la conduite d'air d'admission (4,7) de la chambre de postcombustion est intercalé dans la conduite d'air d'admission (4,7) de la chambre de postcombustion et qu'une installation de postchauffage (8), de préférence une installation de chauffage électrique, est intercalée entre l'échangeur de chaleur (6) et la chambre de postcombustion (9).

13. Dispositif selon la revendication 11 ou 12, caractérisé en ce que la chambre de postcombustion (9) contient un catalyseur d'oxydation.

14. Dispositif selon l'une des revendications 11 à 13, caractérisé en ce qu'un échangeur de chaleur supplémentaire (15) pour l'échange de chaleur avec l'air d'admission ou l'air de circulation du procédé dont est issu l'air d'échappement du processus est intercalé dans la conduite d'air d'échappement (10, 14, 16) de la chambre de postcombustion après l'échangeur de chaleur (6) en vue du réchauffage de l'air d'échappement du processus dns la conduite d'admission (4, 7) de la chambre de postcombustion.

15. Dispositif selon l'une des revendications 11 à 14, caractérisé en ce que la conduite d'air d'admission (4, 7) de la chambre de postcombustion comporte une installation pour le mélange d'air frais (5) avec l'air d'échappement du processus qui y est acheminé.

16. Dispositif selon l'une des revendications 14 et 15, caractérisé en ce qu'il comporte une installation (17, 20) qui règle la proportion d'air d'échappement de la chambre de postcombustion recyclé dans l'air d'admission ou dans l'air de circulation du processus par rapport à l'air d'échappement de la chambre de combustion rejeté dans l'atmosphère.

17. Dispositif selon la revendication 16, caractérisé en ce que l'installation de réglage (17, 20) règle la proportion en fonction de la teneur en oxygène de l'air du processus (18).
